(19) Europäisches Patentamt European Patent Office Office européen des brevets

(11) **EP 1 401 780 B1**

(12) **FASCICULE DE BREVET EUROPEEN**

(45) Date de publication et mention de la délivrance du brevet:
**10.08.2016   Bulletin 2016/32**

(21) Numéro de dépôt: **02751287.0**

(22) Date de dépôt: **26.06.2002**

(51) Int Cl.:
*C03C 3/087* (2006.01)      *C03C 4/02* (2006.01)

(86) Numéro de dépôt international:
**PCT/FR2002/002210**

(87) Numéro de publication internationale:
**WO 2003/004427 (16.01.2003 Gazette 2003/03)**

(54) **COMPOSITION DE VERRE GRIS DESTINEE A LA FABRICATION DE VITRAGE**

GRAUE GLASZUSAMMENSETZUNG ZUR HERSTELLUNG VON SCHEIBEN

GREY GLASS COMPOSITION FOR PRODUCTION OF WINDOWS

(84) Etats contractants désignés:
**AT BE CH CY DE DK ES FI FR GB GR IE IT LI LU MC NL PT SE TR**

(30) Priorité:   **02.07.2001   FR 0108773**

(43) Date de publication de la demande:
**31.03.2004   Bulletin 2004/14**

(73) Titulaire: **SAINT-GOBAIN GLASS FRANCE**
**92400 Courbevoie (FR)**

(72) Inventeurs:
• **TEYSSEDRE, Laurent**
  **F-75013 Paris (FR)**
• **JEANVOINE, Pierre**
  **F-78300 Poissy (FR)**

(74) Mandataire: **Muller, René et al**
**SAINT-GOBAIN RECHERCHE**
**39, quai Lucien Lefranc**
**93303 Aubervilliers (FR)**

(56) Documents cités:
**EP-A- 0 653 386      RO-B- 113 843**
**US-A- 5 478 783**

• **DATABASE WPI Section Ch, Week 199002 Derwent Publications Ltd., London, GB; Class L01, AN 1990-014293 XP002189726 -& SU 1 470 679 A (GUSEV GLASS RES INST), 7 avril 1989 (1989-04-07)**

**EP 1 401 780 B1**

**Description**

L'invention concerne une composition de verre de type silico-sodo-calcique destinée à la réalisation de verres plats de couleur grise. Bien que l'invention ne soit pas limitée à une telle application, elle est plus particulièrement décrite en référence à des applications pour l'automobile, notamment pour former des pare-brise et vitrages latéraux situés à l'avant d'un véhicule.

Les vitrages destinés à l'industrie automobile sont soumis à différentes exigences. En matière de propriétés optiques, ces exigences sont régies par voie de réglementation, par exemple lorsqu'il s'agit de la transmission lumineuse d'un pare-brise, ou bien par souci du confort de l'usager, par exemple en ce qui concerne la transmission énergétique, ou encore pour des raisons d'esthétique, notamment en ce qui concerne la couleur.

Outre les exigences relatives à la transmission lumineuse et à la transmission énergétique, les vitrages situés à l'avant des véhicules doivent répondre aux désirs des constructeurs automobiles pour ce qui est de la couleur, en particulier relativement à la longueur d'onde dominante et à la pureté.

Si les agents susceptibles de conférer telle ou telle couleur sont généralement connus, la recherche d'une couleur particulière en termes de domaine de longueur d'onde et de pureté, associée à des caractéristiques spécifiques, par exemple des facteurs de transmission lumineuse et de transmission énergétique dans une plage de valeurs bien définie, est difficile.

Ainsi, pour obtenir un verre de couleur grise, il est connu d'ajouter des agents colorants dans les matières premières destinées à être fondues pour réaliser la matrice verrière. Ces agents colorants sont par exemple le fer, le sélénium, le nickel, le cobalt, le cérium, l'erbium...

Certains de ces agents, tel l'erbium, sont coûteux et pour cette raison ne sont pas employés ou sont ajoutés en très faible quantité dans la composition de verre.

D'autres, sont jugés très polluants et nécessitent la mise en place d'importants dispositifs de filtration, ce qui génère un surcoût élevé. C'est le cas notamment du sélénium que l'on emploie couramment pour la réalisation de verres gris et dont 70 à 85 % de sa masse est libérée dans l'atmosphère lors de la fusion. De ce fait, les systèmes de filtration spécifiques à cet élément qui équipent les installations de fusion permettant d'éviter une pollution de l'atmosphère augmentent le coût de réalisation de ces verres. Par ailleurs, ces verres sont délicats à mettre en oeuvre du fait de l'existence de plusieurs degrés d'oxydation du sélénium.

D'autres agents colorants encore ne permettent d'obtenir la coloration désirée que si leur teneur dans la composition de verre est relativement élevée. L'introduction d'une quantité importante de colorants renfermant du nickel dans la composition de verre induit la formation de billes de sulfure de nickel au sein du verre. Les vitrages produits à partir d'un tel verre ont tendance à se briser quand on les soumet par la suite à un traitement de trempe thermique du fait de la présence de ces billes.

Il est déjà connu de former des verres colorés en gris en utilisant une composition verrière associant l'oxyde de fer, l'oxyde de cobalt et le sélénium. De tels verres sont cependant très foncés et, de ce fait, ils ne remplissent pas les conditions qui sont exigées pour les vitrages situés à l'avant d'un véhicule.

Dans EP-A-0 653 386, il est proposé des compositions permettant d'obtenir des verres gris utilisables pour l'automobile. Ces compositions se caractérisent par le fait qu'elles renferment soit un mélange d'oxyde de fer, d'oxyde de cobalt et de sélénium, soit un mélange d'oxyde de fer, d'oxyde de cobalt et d'oxyde de nickel, et éventuellement de sélénium. Les compositions comprenant de l'oxyde de nickel contiennent de l'oxyde de cobalt dans une teneur au moins égale à 20 ppm. Ces verres obtenus à partir des compositions de cette dernière catégorie présentent un facteur de transmission lumineuse ($TL_A$) allant d'environ 60 % à environ 72 % qui satisfait les conditions requises pour un usage en tant que pare-brise et/ou vitrage latéral avant. Néanmoins, les vitrages dont le facteur $TL_A$ est égal ou supérieur à 70 % ont un facteur de transmission énergétique ($T_E$) peu élevé, au mieux égal à environ 58 %.

Dans US 5478783, il est proposé des compositions de verre silico-sodo-calcique de teinte neutre qui contiennent de 0,3 à 0,7% d'oxyde de fer, 3 à 25 ppm d'oxyde de cobalt, 0 à 50 ppm d'oxyde de nickel et 0,5 à 10 ppm de selenium.

La présente invention a pour but de proposer une composition de verre gris de type silico-sodo-calcique qui présente une transmission lumineuse globale sous illuminant A ($T_{LA}$) compatible avec une utilisation en tant que vitrage avant d'un véhicule automobile, en particulier un pare-brise, et une transmission énergétique globale satisfaisante, et qui est susceptible d'être nappée à la surface d'un bain de métal selon la technique du verre flotté.

La présente invention a pour objet une composition de verre qui permet d'obtenir un vitrage présentant une coloration grise relativement neutre.

La présente invention a pour objet une composition de verre susceptible d'être élaborée dans les conditions d'oxydo-réduction habituellement observées pour un verre flotté standard et dont le coût est proche du coût de ce dernier.

Ces buts sont atteints selon l'invention grâce à une composition de verre gris de type silico-sodo-calcique présentant une transmission lumineuse globale sous illuminant A ($T_{LA}$) supérieure ou égale à 69 % pour une épaisseur de 3,85 mm, qui comprend les constituants ci-après dans les limites pondérales suivantes :

| | |
|---|---|
| SiO$_2$ | 64 - 75 % |
| Al$_2$O$_3$ | 0 - 5 % |
| B$_2$O$_3$ | 0 - 5 % |
| CaO | 5 - 15 % |
| MgO | 0 - 5 % |
| Na$_2$O | 10 - 18 % |
| K$_2$O | 0 - 5 % |

et les agents colorants ci-après dans les limites pondérales suivantes :

| | |
|---|---|
| Fe$_2$O$_3$ | 0,25 - 0,65 % et de préférence 0,5 - 0,65 % |
| CoO | inférieur à 15 ppm et mieux encore 5 - moins de 15 ppm |
| NiO | 70 - 150 ppm |
| Se | 0 |

où Fe$_2$O$_3$ est le fer total.

Selon une réalisation préférée de l'invention, la transmission énergétique globale (T$_E$) est inférieure ou égale à 55 %, de préférence inférieure à 50 %, pour une épaisseur de 3,85 mm. De telles exigences correspondent notamment à celles qui sont requises dans le domaine automobile pour assurer le confort thermique des personnes se trouvant dans l'habitacle.

De préférence encore, la composition de verre présente une longueur d'onde dominante sous illuminant D65 comprise entre 480 et 550 nm, de préférence entre 490 et 510 nm, et une pureté d'excitation sous ce même illuminant inférieure à 6 %, de préférence inférieure à 5 %, pour une épaisseur de 3,85 mm. De telles exigences correspondent notamment à celles requises pour la coloration neutre souhaitée pour les vitrages latéraux avant des automobiles. Selon la longueur d'onde dominante, le verre obtenu peut présenter une nuance allant du gris-bleu au gris-vert.

De préférence encore, la composition de verre présente un rédox inférieur à 0,55 et de préférence inférieur à 0,35, et mieux encore supérieur à 0,18. Le rédox est défini par le rapport entre la teneur en FeO et la teneur en fer total, exprimée sous la forme Fe$_2$O$_3$, les teneurs étant exprimées en pourcentages pondéraux.

Selon une réalisation avantageuse de l'invention, la composition ne contient pas de sélénium ajouté volontairement, sauf les impuretés pouvant être apportées par certaines matières premières.

Selon une autre réalisation particulièrement avantageuse de l'invention, et notamment pour des applications de type pare-brise et vitrages latéraux pour automobile, la transmission lumineuse globale sous illuminant A (TL$_A$) est de préférence supérieure ou égale à 70 %, et la transmission énergétique est inférieure à 50 %, de préférence inférieure à 48 %, pour une épaisseur de 3,85 mm.

Dans les verres selon l'invention, la silice est généralement maintenue dans des limites très étroites pour les raisons suivantes : au-dessus d'environ 75 %, la viscosité du verre et son aptitude à la dévitrification augmentent fortement ce qui rend plus difficile sa fusion et sa coulée sur un bain d'étain fondu, et au-dessous de 64 %, la résistance hydrolytique du verre décroît rapidement.

Cette diminution de la résistance hydrolytique du verre peut être compensée, au moins en partie, par l'introduction de Al$_2$O$_3$, mais cet oxyde contribue à augmenter sa viscosité et à diminuer la transmission dans le visible. De ce fait, son utilisation n'est envisagée qu'en quantité très limitée.

Les oxydes alcalins Na$_2$O et K$_2$O facilitent la fusion du verre. K$_2$O peut être utilisé jusqu'à 5 % environ car au-delà se pose le problème du coût élevé de la composition. La somme des teneurs en Na$_2$O et K$_2$O, exprimées en pourcentages pondéraux, est de préférence égale ou supérieure à 13 %.

Les oxydes alcalino-terreux jouent un rôle déterminant dans l'obtention des propriétés des verres selon l'invention.

S'agissant de l'oxyde MgO, selon un premier mode de réalisation de l'invention, sa teneur est avantageusement supérieure à 2 %, notamment par souci économique.

Selon un autre mode de réalisation, sa teneur est inférieure à 2 %. Il a en effet été mis en évidence que la limitation de la teneur en MgO à 2 % a pour effet de provoquer le déplacement du maximum de la bande d'absorption de FeO vers les grandes longueurs d'onde, permettant ainsi d'augmenter la capacité d'absorption dans l'infrarouge sans nuire à la transmission dans le visible. La suppression totale de MgO, qui joue un rôle important sur la viscosité peut être compensée, au moins en partie, par une augmentation de la teneur en Na$_2$O et/ou SiO$_2$.

BaO permet d'augmenter la transmission lumineuse et il peut être ajouté dans la composition selon l'invention dans une teneur inférieure à 4 %. En effet, BaO a une influence beaucoup plus faible que MgO et CaO sur la viscosité du verre. Dans le cadre de l'invention, l'augmentation de BaO se fait essentiellement au détriment des oxydes alcalins, de MgO et surtout de CaO. Toute augmentation importante de BaO contribue donc à augmenter la viscosité du verre, notamment aux basses températures. De surcroît, l'introduction d'un pourcentage élevé de BaO majore sensiblement le coût de la composition. De manière préférée, les verres selon l'invention sont exempts de BaO. Lorsqu'ils en contiennent, la teneur en BaO est de préférence comprise entre 0,5 et 3,5 % en poids.

Outre le respect des limites définies précédemment pour la variation de la teneur de chaque oxyde alcalino-terreux, il est préférable pour obtenir les propriétés de transmission recherchées, de limiter la somme des pourcentages pondéraux de MgO, CaO et BaO à une valeur égale ou inférieure à 14 %.

Lorsqu'on souhaite réaliser des verres sélectifs (c'est-à-dire des verres aptes à absorber les radiations dans un domaine de longueur désiré, par exemple correspondant aux rayonnements ultraviolets ou infrarouges, sans affecter notablement la transmission lumineuse), les compositions de verre peuvent encore comprendre au moins un agent absorbant optique tel que $CeO_2$, $TiO_2$, $Cr_2O_3$, $V_2O_5$, $WO_3$, $La_2O_3$, ... La teneur en cet (ces) agent(s) est généralement maintenue inférieure à 2 % en poids de la composition, et de préférence inférieure à 1 %.

Les verres selon l'invention peuvent également contenir jusqu'à 1 % d'autres constituants apportés par les impuretés des matières premières vitrifiables et/ou par l'introduction de calcin recyclé dans le mélange vitrifiable et/ou par l'utilisation d'agent d'affinage ($SO_3$, Cl, $Sb_2O_3$, $As_2O_3$).

Pour faciliter la fusion, et notamment rendre celle-ci mécaniquement intéressante, la matrice présente avantageusement une température correspondant à une viscosité $\eta$ telle que $\log\eta = 2$ qui est inférieure à 1500°C. De préférence encore, notamment lorsqu'on souhaite obtenir le verre sous la forme d'un ruban de verre selon la technique " float ", la matrice présente une température correspondant à la viscosité $\eta$, exprimée en poise, telle que $\log\eta = 3,5$, (notée $T(\log\eta = 3,5)$) et une température au liquidus (notée $T_{liq}$) satisfaisant la relation :

$$T(\log\eta = 3,5) - T_{liq} > 20°C,$$

et de préférence la relation :

$$T(\log\eta = 3,5) - T_{liq} > 50°C,$$

Les exemples de compositions de verre données ci-après permettent de mieux apprécier les avantages de la présente invention.

Dans ces exemples, on indique les valeurs les propriétés suivantes mesurées sous une épaisseur de 3,85 mm :

$\sum$ le facteur de transmission lumineuse globale sous illuminant A ($T_{LA}$) entre 380 et 780 nm,
$\sum$ le facteur de transmission énergétique globale ($T_E$) intégrée entre 295 et 2500 nm selon la norme ISO 9050 (Parry Moon Masse d'air 2),
$\sum$ le facteur de transmission du rayonnement solaire ultraviolet ($T_{UV}$) calculé selon la norme ISO 9050,
$\sum$ la longueur d'onde dominante ($\lambda d$) sous illuminant D65,
$\sum$ la pureté d'excitation ($P_{D65}$) sous illuminant D65.

Les calculs de la transmission lumineuse ($T_{LA}$), de la longueur d'onde dominante ($\lambda d$) et de la pureté (P) sont effectués en prenant l'observateur de référence colorimétrique CIE 1931 (Commission Internationale de l'Eclairage 1931).

Chacune des compositions figurant dans le tableau a été réalisée à partir de la matrice verrière suivante, dont les teneurs sont exprimées en pourcentages pondéraux, celle-ci étant corrigée au niveau de la silice pour s'adapter à la teneur totale en agents colorants ajoutés :

| | |
|---|---|
| $SiO_2$ | 71,00 % |
| $Al_2O_3$ | 0,70 % |
| CaO | 8,90 % |
| MgO | 3,80 % |
| $Na_2O$ | 14,10 % |
| $K_2O$ | 0,10 % |

Les températures $T(\log\eta=2)$ et $T(\log\eta=3,5)$ correspondant respectivement aux viscosités, exprimées en poise, telles

que $\log\eta$ = 2 et $\log\eta$ = 3,5 ainsi que la température de liquidus $T_{liq}$ sont identiques pour tous les verres donnés (ceux-ci étant réalisés à partir de la même matrice verrière) et sont les suivantes :

| | |
|---|---|
| $T(\log\eta=2)$ | 1410°C |
| $T(\log\eta=3,5)$ | 1100°C |
| $T_{liq}$ | 1060°C |

Les verres des exemples 1 à 5 sont des exemples réalisés selon l'invention dont les compositions ont été mesurées alors que les verres des exemples 6 à 18 sont donnés avec leurs compositions théoriques.

Les exemples 1 à 7, 11, 15 et 16 selon l'invention montrent que, dans une large gamme d'agents colorants, il est possible d'obtenir des verres gris neutre satisfaisant les contraintes optiques, à savoir une transmission lumineuse globale élevée ($T_{LA}$> 67 %) et une transmission énergétique relativement basse, au plus égale à 55 %. Ces bonnes propriétés des verres résultent en grande partie du fait que la teneur en oxyde de cobalt dans la composition est inférieure à 20 ppm. Les exemples montrent également que les propriétés optiques visées peuvent être atteintes sans l'ajout de sélénium, ce qui est particulièrement avantageux en terme de coût et de risque de pollution de l'environnement.

Les verres obtenus à partir des compositions selon l'invention sont compatibles avec les techniques habituelles de fabrication du verre plat. L'épaisseur du ruban de verre obtenu par nappage du verre en fusion sur un bain d'étain peut atteindre 20 mm et, en général, elle varie entre 0,8 et 10 mm.

Le vitrage obtenu par la découpe du ruban de verre peut subir ultérieurement une opération de bombage et/ou d'émaillage, notamment lorsqu'il s'agit d'un vitrage automobile.

Pour réaliser des pare-brise ou des vitrages latéraux, le vitrage est initialement découpé dans un ruban de verre dont l'épaisseur varie généralement entre 3 et 5 millimètres. Sous ces épaisseurs, le verre assure un bon confort thermique. Les pare-brise ou les vitrages latéraux en question peuvent être feuilletés auquel cas ils sont constitués de plusieurs feuilles de verre dont une au moins est obtenue à partir de la composition selon l'invention.

Les vitrages entrant dans le cadre de la présente invention peuvent être soumis au préalable à des traitements de surface ou être associés, par exemple, à un revêtement organique tel qu'un film à base de polyuréthanes à propriétés anti-lacérantes ou à un film assurant l'étanchéité en cas de bris.

Ces vitrages peuvent également être revêtus d'au moins une couche d'oxyde métallique obtenue par dépôt chimique à haute température selon les techniques de pyrolyse ou de dépôt chimique en phase vapeur (CVD) ou par dépôt sous vide.

TABLEAU

| | 1 | 2 | 3 | 4 | 5 | 6 | 7 | 8* | 9* | 10* | 11 | 12* | 13* | 14* | 15 | 16 | 17* | 18* |
|---|---|---|---|---|---|---|---|---|---|---|---|---|---|---|---|---|---|---|
| $Fe_2O_3$ (%) | 0,56 | 0,57 | 0,54 | 0,54 | 0,58 | 0,51 | 0,26 | 0,50 | 0,60 | 0,45 | 0,49 | 0,34 | 0,62 | 0,45 | 0,51 | 0,45 | 0,5 | 0,45 |
| FeO (%) | 0,15 | 0,185 | 0,21 | 0,165 | 0,178 | 0,18 | 0,13 | 0,12 | 0,21 | 0,16 | 0,148 | 0,124 | 0,13 | 0,16 | 0,13 | 0,16 | 0,13 | 0,16 |
| Rédox | 0,27 | 0,32 | 0,39 | 0,30 | 0,31 | 0,35 | 0,50 | 0,24 | 0,35 | 0,36 | 0,30 | 0,36 | 0,21 | 0,36 | 0,25 | 0,35 | 0,26 | 0,35 |
| CoO (ppm) | 9 | 6 | 10 | 9 | 10 | 0 | 14 | 13 | 3 | 15 | 14 | 15 | 15 | 10 | 10 | 0 | 19 | 18 |
| NiO (ppm) | 150 | 100 | 80 | 80 | 80 | 150 | 150 | 200 | 45 | 50 | 110 | 130 | 80 | 50 | 75 | 143 | 200 | 100 |
| Se (ppm) | 0 | 0 | 0 | 0 | 0 | 0 | 0 | 0 | 0 | 0 | 0 | 0 | 0 | 5 | 0 | 0 | 0 | 0 |
| $T_{LA}$ (%) | 69,3 | 70,3 | 69,0 | 71,7 | 70,4 | 71,7 | 71,7 | 69,2 | 73,2 | 73,1 | 71,3 | 72,1 | 72,4 | 69,0 | 74,5 | 73,3 | 67 | 67,6 |
| $T_E$ (%) | 48,9 | 46,3 | 44,7 | 49,4 | 47,1 | 48,3 | 54,9 | 53,8 | 46,9 | 51,9 | 51,9 | 55,0 | 54,3 | 49,2 | 55,0 | 51,4 | 51,7 | 49,0 |
| $T_{UV}$ (%) | 32,0 | 32,1 | 32,1 | 33,7 | 31,2 | 34,1 | 51,5 | 31,0 | 31,1 | 36,4 | 33,2 | 41,7 | 26,4 | 30,1 | 31,1 | 36,2 | 35,0 | 36,8 |
| $\lambda d$ (nm) | 507 | 495 | 493 | 495 | 495 | 507 | 495 | 546 | 492 | 489 | 495 | 496 | 499 | 517 | 497 | 512 | 517 | 494 |
| PD65 (%) | 2,2 | 4,2 | 5,4 | 3,64 | 4,1 | 2,3 | 2,7 | 3,0 | 5,7 | 5,8 | 3,2 | 2,7 | 2,6 | 1,2 | 2,7 | 1,8 | 1,6 | 3,0 |

*Exemples non conformes à l'invention

EP 1 401 780 B1

**Revendications**

1. Composition de verre gris de type silico-sodo-calcique présentant une transmission lumineuse globale sous illuminant A ($TL_A$) supérieure ou égale à 69 %, pour une épaisseur de verre égale à 3,85 mm, *caractérisée en* ce *qu'elle* comprend les constituants ci-après dans les limites pondérales suivantes :

| | |
|---|---|
| $SiO_2$ | 64 - 75 % |
| $Al_2O_3$ | 0 - 5 % |
| $B_2O_3$ | 0 - 5 % |
| CaO | 5 - 15 % |
| MgO | 0 - 5 % |
| $Na_2O$ | 10 - 18 % |
| $K_2O$ | 0 - 5 % |

et les agents colorants ci-après dans les limites pondérales suivantes :

| | |
|---|---|
| $Fe_2O_3$ | 0,25 - 0,65 % et de préférence 0,5 - 0,65 % |
| CoO | inférieur à 15 ppm |
| NiO | 70 - 150 ppm |
| Se | 0 |

où $Fe_2O_3$ est le fer total.

2. Composition de verre selon la revendication 1, *caractérisée en ce que* la teneur en CoO varie de 5 à moins de 15 ppm.

3. Composition de verre selon la revendication 1 ou 2, *caractérisée* **en ce** *qu'elle* présente une transmission énergétique globale ($T_E$) inférieure à 55 %, de préférence inférieure à 50 %, pour une épaisseur de 3,85 mm.

4. Composition de verre selon l'une des revendications 1 à 3, *caractérisée en ce que* le rédox est inférieur à 0,55, et de préférence inférieur à 0,35, et mieux encore supérieur à 0,18.

5. Composition de verre selon l'une des revendications 1 à 4, *caractérisée en ce que* la transmission énergétique globale ($T_E$) inférieure à 48 %.

6. Composition de verre selon l'une des revendications 1 à 5, *caractérisée* **en ce qu'**elle présente une longueur d'onde dominante comprise entre 480 et 550 nm et une pureté inférieure à 6 %, sous illuminant D65 et pour une épaisseur de 3,85 mm.

7. Composition de verre selon la revendication 6, *caractérisée* **en ce qu'**elle présente une longueur d'onde comprise entre 490 et 510 nm.

8. Composition de verre selon l'une des revendications 6 ou 7, *caractérisée en ce qu'elle* présente une pureté inférieure à 5 %.

9. Composition de verre selon l'une des revendications 1 à 8, *caractérisée en* ce **qu'**elle comprend en outre au moins un agent absorbant optique tel que $CeO_2$, $TiO_2$, $Cr_2O_3$, $V_2O_5$, $WO_3$, $La_2O_3$.

10. Composition de verre selon l'une des revendications 1 à 9, *caractérisée* **en ce que** la différence entre la température correspondant à une viscosité $\eta$, exprimée en poise, telle que $\log\eta = 3,5$, et la température de liquidus $T_{liq}$, est supérieure à 20°C et de préférence supérieure à 50°C.

11. Composition de verre selon l'une des revendications 1 à 10, *caractérisée* **en ce que** la température correspondant à une viscosité $\eta$, exprimée en poise, telle que $\log\eta = 2$, est inférieure à 1500°C.

12. Vitrage, *caractérisé en* ce **qu'**il comprend au moins une feuille de verre dont la composition chimique est définie par l'une quelconque des revendications 1 à 11.

**13.** Vitrage selon la revendication 12, *caractérisé en ce que* la feuille présente une longueur d'onde dominante comprise entre 480 et 550 nm et une pureté inférieure à 6 %, sous illuminant D65 et pour une épaisseur de 3,85 mm.

**14.** Vitrage selon la revendication 13, *caractérisé en ce que* la feuille présente une longueur d'onde dominante comprise entre 490 et 510 nm et une pureté inférieure à 5 %.

**15.** Vitrage selon l'une des revendications 12 à 14, *caractérisé en ce que* la feuille présente une épaisseur jusqu'à 20 mm, de préférence comprise entre 0,8 et 10 mm.

**16.** Vitrage feuilleté comprenant deux feuilles de verre dont l'une au moins est un vitrage selon la revendication 12.


**Patentansprüche**

**1.** Grauglaszusammensetzung des Silizium-Kalk-Natron-Typs, die einen globalen Lichttransmissionsgrad für Normlichtart A ($T_{LA}$) von über oder gleich 69 % bei einer Glasdicke gleich 3,85 mm aufweist, **dadurch gekennzeichnet, dass** sie die nachstehenden Bestandteile innerhalb der folgenden Gewichtsgrenzen enthält:

| | |
|---|---|
| $SiO_2$ | 64-75 % |
| $Al_2O_3$ | 0-5 % |
| $B_2O_3$ | 0-5 % |
| CaO | 5-15 % |
| MgO | 0-5 % |
| $Na_2O$ | 10-18 % |
| $K_2O$ | 0-5 % |

und die nachstehenden Farbstoffe innerhalb der folgenden Gewichtsgrenzen enthält:

| | |
|---|---|
| $Fe_2O_3$ | 0,25-0,65 % und vorzugsweise 0,5-0,65 % |
| CoO | weniger als 15 ppm |
| NiO | 70-150 ppm |
| Se | 0, |

wobei $Fe_2O_3$ das Gesamteisen ist.

**2.** Glaszusammensetzung nach Anspruch 1, **dadurch gekennzeichnet, dass** der CoO-Gehalt von 5 bis unter 15 ppm variiert.

**3.** Glaszusammensetzung nach Anspruch 1 oder 2, **dadurch gekennzeichnet, dass** sie einen globalen Strahlungstransmissionsgrad ($T_E$) von unter 55 %, vorzugsweise von unter 50 % bei einer Dicke von 3,85 mm aufweist.

**4.** Glaszusammensetzung nach einem der Ansprüche 1 bis 3, **dadurch gekennzeichnet, dass** der Redoxgrad kleiner als 0,55 und vorzugsweise kleiner als 0,35 und besser noch größer als 0,18 ist.

**5.** Glaszusammensetzung nach einem der Ansprüche 1 bis 4, **dadurch gekennzeichnet, dass** der globale Strahlungstransmissionsgrad ($T_E$) weniger als 48 % beträgt.

**6.** Glaszusammensetzung nach einem der Ansprüche 1 bis 5, **dadurch gekennzeichnet, dass** sie eine dominante Wellenlänge in einem Bereich von 480 bis 550 m und eine Reinheit von unter 6 % für Normlichtart D65 und bei einer Dicke von 3,85 mm aufweist.

**7.** Glaszusammensetzung nach Anspruch 6, **dadurch gekennzeichnet, dass** sie eine Wellenlänge in einem Bereich von 490 bis 510 nm aufweist.

**8.** Glaszusammensetzung nach einem der Ansprüche 6 oder 7, **dadurch gekennzeichnet, dass** sie eine Reinheit von unter 5 % aufweist.

**9.** Glaszusammensetzung nach einem der Ansprüche 1 bis 8, **dadurch gekennzeichnet, dass** sie ferner mindestens ein optisches Absorptionsmittel wie $CeO_2$, $TiO_2$, $Cr_2O_3$, $V_2O_5$, $WO_3$, $La_2O_3$ enthält.

**10.** Glaszusammensetzung nach einem der Ansprüche 1 bis 9, **dadurch gekennzeichnet, dass** der Unterschied zwischen der Temperatur, die einer Viskosität $\eta$, ausgedrückt in Poise, wie $\log\eta = 3{,}5$, entspricht, und der Liquidustemperatur $T_{liq}$ größer als 20 °C und vorzugsweise größer als 50 °C ist.

**11.** Glaszusammensetzung nach einem der Ansprüche 1 bis 10, **dadurch gekennzeichnet, dass** die Temperatur, die einer Viskosität $\eta$, ausgedrückt in Poise, wie $\log\eta = 2$, entspricht, kleiner als 1500 °C ist.

**12.** Verglasung, **dadurch gekennzeichnet, dass** sie mindestens eine Glasscheibe umfasst, deren chemische Zusammensetzung durch einen der Ansprüche 1 bis 11 definiert ist.

**13.** Verglasung nach Anspruch 12, **dadurch gekennzeichnet, dass** die Scheibe eine dominante Wellenlänge in einem Bereich von 480 bis 550 nm und eine Reinheit von unter 6 % für Normlichtart D65 und bei einer Dicke von 3,85 mm aufweist.

**14.** Verglasung nach Anspruch 13, **dadurch gekennzeichnet, dass** die Scheibe eine dominante Wellenlänge in einem Bereich von 490 bis 510 nm und eine Reinheit von unter 5 % aufweist.

**15.** Verglasung nach einem der Ansprüche 12 bis 14, **dadurch gekennzeichnet, dass** die Scheibe eine Dicke bis 20 mm, vorzugsweise in einem Bereich von 0,8 bis 10 mm aufweist.

**16.** Verbundverglasung, die zwei Glasscheiben umfasst, von denen mindestens eine Verglasung nach Anspruch 12 ist.

**Claims**

**1.** A gray glass composition of the soda-lime-silicate type having an overall light transmission under illuminant A ($T_{LA}$) greater than 69% for a glass thickness equal to 3.85 mm, *characterized in that* it comprises the constituents below within the following limits by weight:

| | |
|---|---|
| $SiO_2$ | 64 - 75% |
| $Al_2O_3$ | 0 - 5% |
| $B_2O_3$ | 0 - 5% |
| CaO | 5 - 15% |
| MgO | 0 - 5% |
| $Na_2O$ | 10 - 18% |
| $K_2O$ | 0 - 5% |

and the coloring agents below within the following limits by weight:

| | |
|---|---|
| $Fe_2O_3$ | 0.25 - 0.65% and preferably 0.5 - 0.65% |
| CoO | less than 15 ppm |
| NiO | 70 - 150 ppm |
| Se | 0 |

where $Fe_2O_3$ is the total iron.

**2.** The glass composition as claimed in claim 1, *characterized in that* the CoO content varies from 5 to 15 ppm.

**3.** The glass composition as claimed in claim 1 or 2, *characterized in that* it has an overall energy transmission ($T_E$) of less than 55%, preferably less than 50%, for a thickness of 3.85 mm.

**4.** The glass composition as claimed in one of claims 1 to 3, *characterized in that* the redox value is less than 0.55 and preferably less than 0.35, and better still greater than 0.18.

5. The glass composition as claimed in one of claims 1 to 4, ***characterized in that*** the overall energy transmission ($T_E$) is less than 48%.

6. The glass composition as claimed in one of claims 1 to 5, ***characterized in that*** it has a dominant wavelength of between 480 and 550 nm and a purity of less than 6% under illuminant $D_{65}$ and for a thickness of 3.85 mm.

7. The glass composition as claimed in claim 6, ***characterized in that*** it has a wavelength of between 490 and 510 nm.

8. The glass composition as claimed in either of claims 6 and 7, ***characterized in that*** it has a purity of less than 5%.

9. The glass composition as claimed in one of claims 1 to 8, ***characterized in that*** it furthermore includes at least one optical absorption agent such as $CeO_2$, $TiO_2$, $Cr_2O_3$, $V_2O_5$, $WO_3$, $La_2O_3$.

10. The glass composition as claimed in one of claims 1 to 9, ***characterized in that*** the difference between the temperature corresponding to a viscosity $\eta$, expressed in poise, such that $\log\eta = 3.5$, and the liquidus temperature $T_{liq}$ is greater than 20°C and preferably greater than 50°C.

11. The glass composition as claimed in one of claims 1 to 10, ***characterized in that*** the temperature corresponding to a viscosity $\eta$, expressed in poise, such that $\log\eta = 2$, is less than 1500°C.

12. A window, ***characterized in that*** it comprises at least one glass pane whose chemical composition is defined by any one of claims 1 to 11.

13. The window as claimed in claim 14, ***characterized in that*** the pane has a dominant wavelength of between 480 and 550 nm and a purity of less than 6% under illuminant $D_{65}$ and for a thickness of 3.85 mm.

14. The window as claimed in claim 13, ***characterized in that*** the pane has a dominant wavelength of between 490 and 510 nm and a purity of less than 5%.

15. The window as claimed in one of claims 12 to 14, ***characterized in that*** the pane has a thickness of up to 20 mm, preferably between 0.8 and 10 mm.

16. Laminated glass window comprising two glass panes, at least one of which is the window as claimed in claim 12.

**EP 1 401 780 B1**

**RÉFÉRENCES CITÉES DANS LA DESCRIPTION**

**Documents brevets cités dans la description**

- EP 0653386 A

- US 5478783 A